(19) Europäisches Patentamt
European Patent Office
Office européen des brevets

(11) **EP 4 644 946 A1**

(12) **EUROPEAN PATENT APPLICATION**

(43) Date of publication:
**05.11.2025 Bulletin 2025/45**

(21) Application number: **24172956.5**

(22) Date of filing: **29.04.2024**

(51) International Patent Classification (IPC):
**G01S 7/10** (2006.01)  **G01S 7/40** (2006.01)
**G01S 13/931** (2020.01)  **G01S 13/90** (2006.01)

(52) Cooperative Patent Classification (CPC):
**G01S 13/931; G01S 7/10; G01S 7/403;**
**G01S 13/90;** G01S 2013/93275

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Aptiv Technologies AG**
**8200 Schaffhausen (CH)**

(72) Inventors:
• **SOMMER, Aron**
  **8200 Schaffhausen (CH)**
• **AGETHEN, Roman**
  **8200 Schaffhausen (CH)**
• **BUSCH, Mathias**
  **8200 Schaffhausen (CH)**

(74) Representative: **Manitz Finsterwald**
**Patent- und Rechtsanwaltspartnerschaft mbB**
**Martin-Greif-Straße 1**
**80336 München (DE)**

(54) **METHOD AND SYSTEM FOR ESTIMATING A MOUNTING ANGLE OF A RADAR SENSOR**

(57) A computer implemented method for estimating a mounting angle of a radar sensor comprises the following steps carried out by computer hardware components: acquiring radar sensor data using a radar sensor; acquiring a synthetic aperture radar image using the radar sensor and/or using the radar sensor data; and estimating a mounting angle of the radar sensor based on the synthetic aperture radar image and the radar sensor data.

Fig. 1

## Description

FIELD

The present disclosure relates to methods and systems for estimating a mounting angle of a radar sensor.

BACKGROUND

Radar sensors may be used for determining locations of objects relative to the sensor. Thus, when used in automotive applications in a vehicle, the location and orientation of the radar sensors relative to the ego-vehicle may have to be known in order to determine locations of the objects relative to the ego-vehicle.

Accordingly, there is a need to provide methods and systems for estimating a mounting angle of a radar sensor.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for estimating a mounting angle of a radar sensor on a vehicle, the method comprising the following steps performed (in other words: carried out) by computer hardware components: acquiring radar sensor data using a radar sensor; acquiring a synthetic aperture radar image using the radar sensor and/or using the radar sensor data; and estimating (in other words: determining) a mounting angle (or an error of an assumed mounting angle, or an offset between an assumed mounting angle and an actual mounting angle) of the radar sensor based on the synthetic aperture radar image and the radar sensor data.

In other words, the orientation of the radar sensor relative to the vehicle may be determined using a synthetic aperture radar image. Since the synthetic aperture radar image is independent of the mounting angle, this may provide an efficient and reliable method.

According to an embodiment, estimating the mounting angle comprises solving a mathematical problem, for example an optimization problem, as described herein in detail below. Illustratively, the optimization problem assumes a plurality of (virtual) mounting angles of the radar sensor, for each of the (virtual) mounting angles rotates the radar sensor data so that it corresponds to the (virtual) mounting angle, and minimizes a difference between the rotated radar sensor data and the synthetic aperture radar image (wherein the synthetic aperture radar image is independent from the mounting angle).

According to an embodiment, estimating the mounting angle may be repeated based on a pre-determined rule.

According to an embodiment, the pre-determined rule may be based on a pre-determined time interval. For example, the mounting angle may be estimated once every pre-determined time interval, for example every minute, or every hour, or every day, or every week, or every month, or every year.

According to an embodiment, the pre-determined rule is based on an expected change of the mounting angle. For example, after an impact of the vehicle, where the radar sensor may have been shifted relative to the body of the vehicle, the mounting angle may be estimated.

According to an embodiment, the mounting angle may be estimated in a situation where a yaw rate of the vehicle is below a pre-determined threshold. This may reduce impact of the movement of the vehicle to the radar sensor data.

According to an embodiment, the mounting angle is estimated in a situation where a speed of the vehicle is within a pre-determined range. This may provide that the SAR (Synthetic Aperture Radar) images may be captured properly.

According to an embodiment, the method may further comprise dividing the synthetic aperture radar image into a plurality of sub-images; wherein estimating the mounting angle is based only on a subset of the plurality of sub-images. This may reduce computational complexity.

According to an embodiment, the subset may be related to stationary detections (and only to stationary detections). This may remove moving objects from the computation.

According to an embodiment, the subset may be related to strong radar cross section detections (and only to strong radar cross section detections). This may provide that only useful detections are used.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system as described herein.

According to an embodiment, the vehicle may further comprise the radar sensor.

According to an embodiment, the vehicle may further comprise an odometry sensor, for example an IMU (inertial measurement unit).

In another aspect, the present disclosure is directed at a non-transitory computer readable medium comprising instructions for carrying out (in other words: comprising instructions, which, when executed by a computer system make the computer system perform) several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1      an illustration of a method according to various embodiments;

Fig. 2      an illustration of a single-scan SAR image of a fence overlaid by radar detections;

Fig. 3A      an illustration of detections in the radar coordinate system;

Fig. 3B      an illustration of the SAR image resulting from the detections illustrated in Fig. 3A;

Fig. 4      an illustration of a graph representing SAR intensity as a function of mounting angle correction;

Fig. 5A      an illustration of uncorrected detections with underlay of SAR image in cartesian radar sensor coordinates.;

Fig. 5B      an illustration of corrected detections with underlay of SAR image in cartesian radar sensor coordinates;

Fig. 6      a flow diagram illustrating a method for estimating a mounting angle of a radar sensor on a vehicle according to various embodiments; and

Fig. 7      a computer system with a plurality of computer hardware components configured to carry out steps of a computer implemented method for estimating a mounting angle of a radar sensor on a vehicle according to various embodiments.

DETAILED DESCRIPTION

Radar sensors may be used for determining locations of objects relative to the sensor. Thus, when used in automotive applications in a vehicle, the location and orientation of the radar sensors relative to the vehicle may have to be known in order to determine locations of the objects relative to the vehicle.

Corner-radars and/ or side-radars may be mounted with a specific boresight angle to be optimally integrated behind the vehicle's bumper and to cover the front- as well as side-application. A 360° coverage may be desirable.

Due to inaccuracies in production, the actual mounting angle or the radar sensor may differ from the nominal mounting angle radar sensor in the order of approximately one degree or even more.

In case of a small damage to the bumper, loose connections or fatigue of material, the mounting angle may even change with time.

Precisely estimating the current mounting angle and correcting may be desired for ensuring a properly working radar. Estimating the current mounting angle may also be part of health state diagnosis of the radar.

Estimating the current mounting angle may be estimated on the radar processor itself, for example regularly in time, for example not depending of external data, and results may preferably be available immediately. Alternatively, the current mounting angle may be estimated on a central ECU (electronic control unit).

Mounting angle estimation may be desired in-vehicle for various reasons, for example to have a properly working radar, or for offline verification.

Calibration of radar sensor on phase level may be complicated.

According to various embodiments, methods and systems are provided for estimating a mounting angle of a radar sensor, for example utilizing the technique of Synthetic Aperture Radar (SAR) to generate a radar image of one channel based on the speed of the ego-vehicle and comparing this radar image to the radar detections. Since the SAR image is independent of the radar mounting angle, it can be used for its estimation.

Synthetic aperture radar (SAR) is a technique to perform coherent integration over a period of time taking the motion of a sensor into consideration. SAR may transform radar data into a specific coordinate system, e.g. into a cartesian coordinate system. SAR may be an alternative to angle finding. An example of an SAR technique may be the fast Fourier transform (FFT) in doppler domain. Other SAR techniques may for example be Range-Doppler, Wavenumber-Domain and Backprojection. A synthetic aperture may be formed by moving a real aperture along a path and processing all data at once.

The methods and systems according to various embodiments may use Synthetic Aperture Radar (SAR) to generate a radar image based on speed and yaw rate of the ego-vehicle and may compare the SAR image to the radar detections, and may accordingly provide methods and systems for radar sensor mounting angle estimation.

The methods and systems according to various embodiments may use Synthetic Aperture Radar (SAR) to generate a radar image of one channel based on the speed (and/or yaw rate) of the ego-vehicle and comparing this radar image to the radar detections. For example, a commonly used MIMO (multiple input multiple output) radar may have 3TX (transmitter) antennas and 4 RX (receiver) antennas, so that 12 virtual channels may be created. In contrast thereto, SAR may only require 1TX antenna and 1RX antenna so that either a simplified radar may be used or only the data from one channel may be used. The data from the 11 remaining channels may be used for other tasks like, for example, "Moving Target Identification".

SAR may use one antenna and its motion to generate an image. Hence, SAR is independent of radar mounting angle and may be used for mounting angle estimation according to various embodiments.

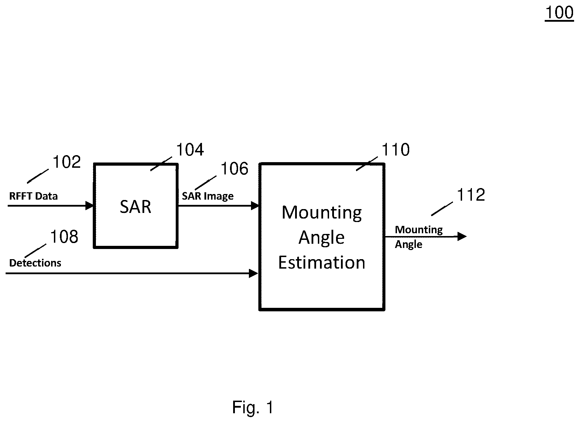

Fig. 1 shows an illustration 100 of a method according to various embodiments. RFFT (range fast Fourier transform) data 102, which may be digitally sampled input voltages) may be provided to a SAR block 104 which may generate a SAR image 106 based on the RFFT data 102. Radar detections 108 and the SAR image 106 may be provided to a mounting angle estimation block 110, which may determine (in other words: estimate) the mounting angle 112 based on the SAR image 106 and the radar detections 108. The radar detections 108 may be filtered so that no moving objects are represented by the radar detections 108. The radar detections 108 may be determined based on the RFFT data 102.

Various kinds of data may be used as input to the SAR. The various kinds of data may be converted from one type to another type by pre-processing.

ADC (Analog-Digital-Converter) data may be data that is obtained directly after analog-digital conversion, and may be provided as numbers to further processing methods.

RFFT (range fast Fourier transform) data may be understood as ADC data that have undergone an FFT (fast Fourier transform) in range dimension. These data may be provided to the SAR processor.

ADC data may be obtained from a plurality of channels (in other words: from a plurality of antennas) of the radar sensor. For further processing, only one antenna may be selected, or a combination of more than one or even all antennas of the radar sensor may be obtained for further processing.

Generally, any kind of radar data may be used for the methods herein. For example, ADC data or RFFT data may be used as the radar data herein.

After estimating the angle and verifying the angle, the angle may be used in processing at the sensor (for example may be used by software of the sensor), for example for transforming detections from a sensor coordinate system to a (ego) vehicle coordinate system. The angle may further be used for other purposes, for example in a tracker.

According to various embodiments, an optimization approach may be used to find the maximum of a cost function (in other words: objective function). The angle, which corresponds to the maximum of the cost function, corresponds to the optimal radar mounting angle. The cost function $C$ may be defined as sum over all amplitude $\mathcal{A}$ values evaluated at positions $x_i$ of detections depending on mounting angle correction $\delta$:

$$C(\delta) = \sum_{i=1}^{N} \mathcal{A}\big(x_i(\delta)\big)$$

The optimal mounting angle correction $\hat{\delta}$ optimizes the cost function $C$

$$\hat{\delta} = \arg\max_{\delta} \ C(\delta)$$

Illustratively, peaks in the radar detections 108 are rotated so that they match with peaks in the SAR image 106, in order to determine the mounting angle 112.

The optimization process may be carried out several time for different scenarios to stabilize the output as well as to save computational costs.

When looking at information on objects in the real world, overlaid by radar detections, it may be observed that detections from radar do not align with the objects due to the mounting angle discrepancy.

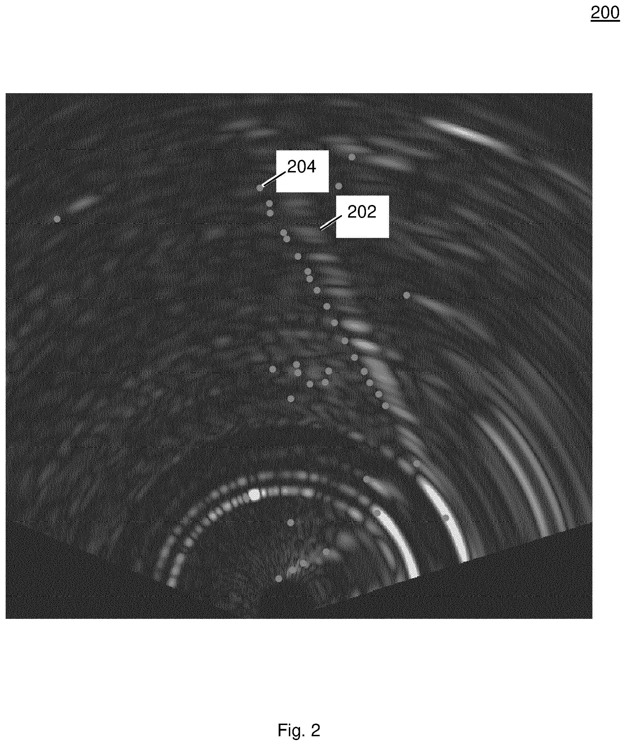

Fig. 2 shows an illustration 200 of a single-scan SAR image 202 of a fence overlaid by radar detections (wherein in Fig. 2 one detection is illustratively marked with reference sign 204, and it will be understood that several detections are illustrated in Fig. 2 by dots similar to the dot near reference sign 204) coming in via CAN (Controller Area Network bus). According to various embodiments, a present mounting angle discrepancy may be calculated.

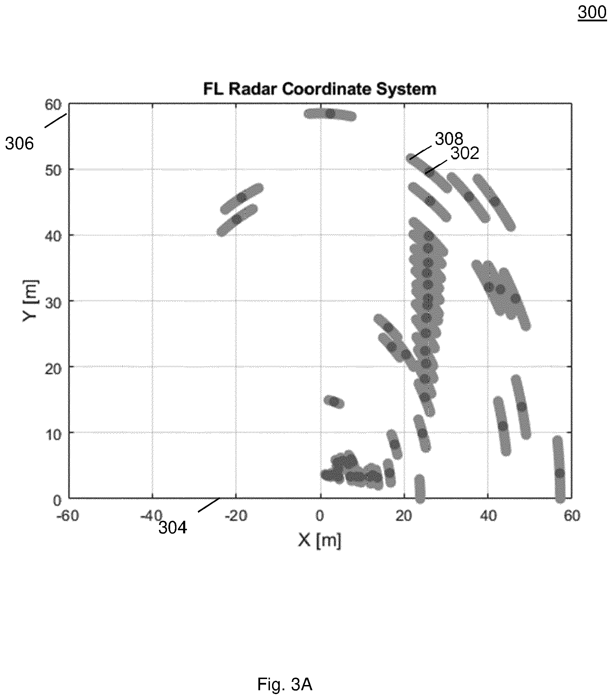

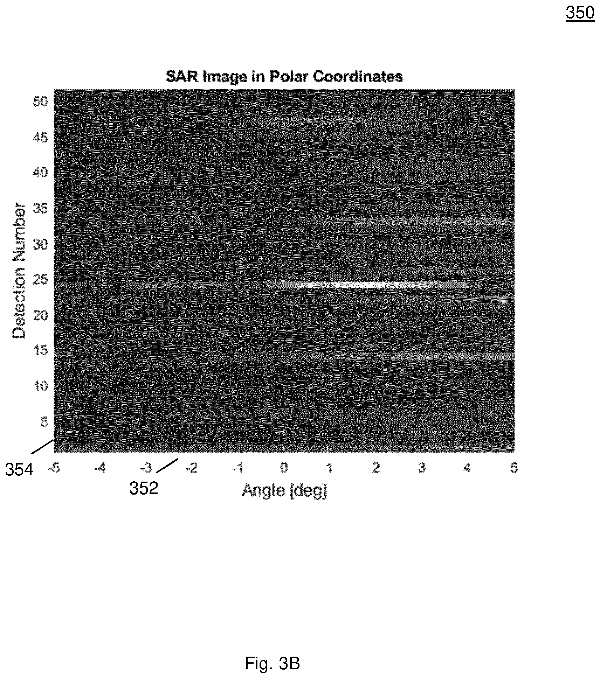

Fig. 3A shows an illustration 30 of detections 302 in the radar coordinate system with x axis 304 and y axis 306. Each detection is shown with a corresponding arc 308. It will be understood that Fig. 3A is a schematic illustration, and thus, only one level of gray is used for the arcs 308 (while, for example, Fig. 2, Fig. 3B, Fig. 5A und Fig. 5B actual measurements are illustrated, and accordingly, various levels of gray are used). The arcs refer to rotated detections, wherein the center of rotation is the center of the radar sensor. An amount of rotation is indicated by the x axis of Fig. 3B. The amount of rotation may be arbitrary but fixed. According to various embodiments, the amount of angles under test may be specified by the user and the resolution (or steps) may be defined by the user. This may result in a 1D grid which may form the x axis in Fig. 3B.

These arcs may be used as a grid on which the SAR image is calculated.

It will be understood that more detections that illustrated in Fig. 3A may be present, but that only the detections illustrated in Fig. 3A may be used for determining the mounting angle. The detections that are used may, for example, be determined so that only static objects are represented by the detections.

Fig. 3B shows an illustration 350 of the SAR image resulting from the detections illustrated in Fig. 3A. The SAR image includes SAR pixels in polar coordinates for efficient SAR processing with a horizontal axis 352 representing the angle and a vertical axis 354 representing the detection number. Each row of the SAR image corresponds to one detection.

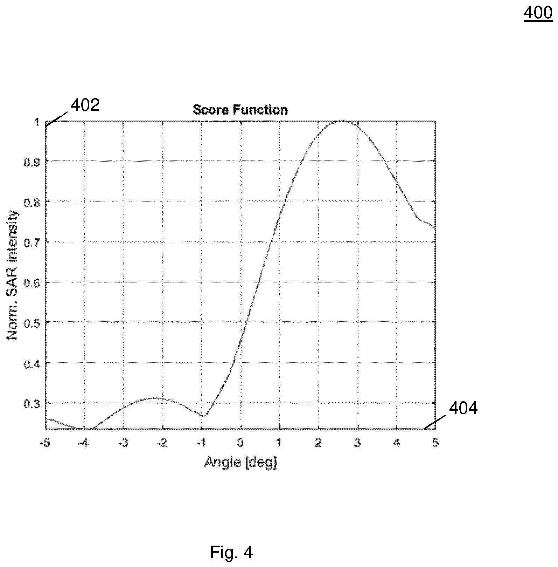

Fig. 4 shows an illustration 400 of a graph representing SAR intensity (on a vertical axis 402) as a function of mounting angle correction (on a horizontal axis 404) for all detections together (wherein "all detections together" refers to integration of the matrix shown in Fig. 3B in a vertical plane, for example the sum of all intensity values per degree over all detections).

The score function (in other words: cost function) illustrated in Fig. 4 is the SAR intensity. Alternatively or additionally, an amplitude or a similar quantity may be used in the cost function. It will be understood that intensity is the square of amplitude.

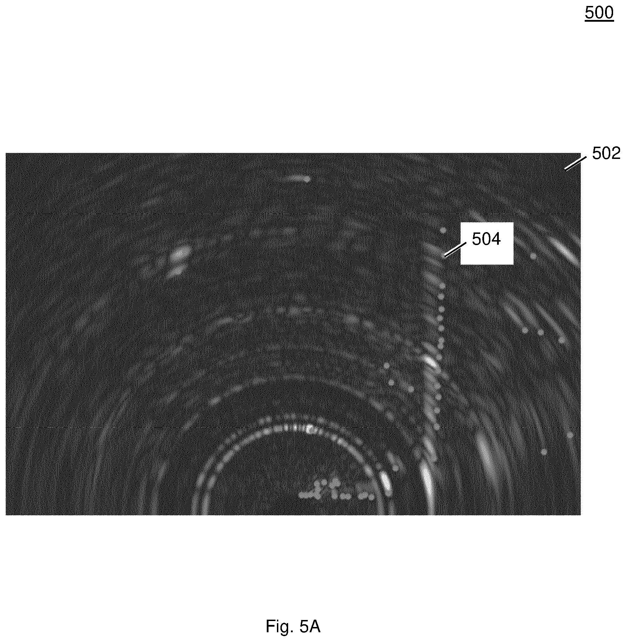

Fig. 5A shows an illustration 500 of uncorrected detections 504 with underlay of SAR image 502 in cartesian radar sensor coordinates. In Fig. 5A, one uncorrected detection is illustratively marked with reference sign 504, and it will be understood that several detections are illustrated in Fig. 5A by dots similar to the dot near reference sign 504).

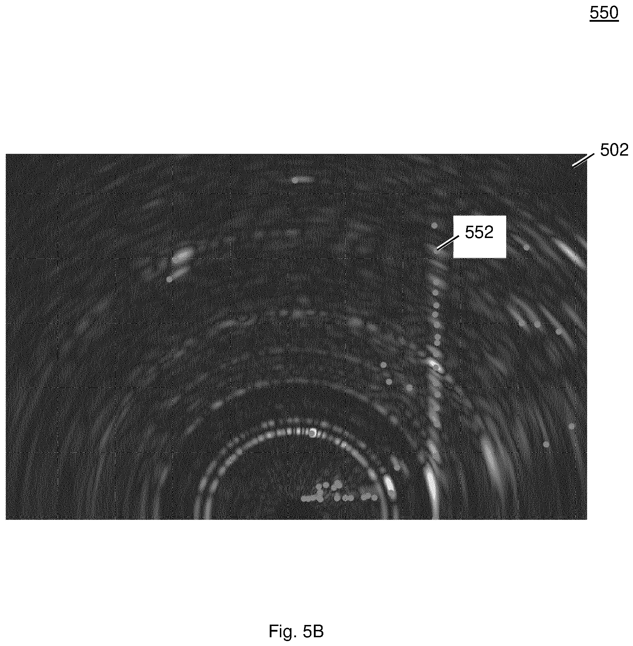

Fig. 5B shows an illustration 550 of corrected detections 552 with underlay of SAR image in cartesian radar sensor coordinates. In Fig. 5B, one corrected detection is illustratively marked with reference sign 552, and it will be understood that several detections are illustrated in Fig. 5B by dots similar to the dot near reference sign 552). The corrected detection 552 corresponds to the uncorrected detection 504 after correction according to various embodiments.

According to various embodiments, a full SAR image may not be needed for mounting angle correction, but only sub-portions of the SAR image may be used.

According to various embodiments, a resource efficient implementation by region of interest processing may be provided as follows:

- Radar detections are transformed in cartesian radar sensor coordinates (as illustrated in Fig. 3);
- Define a grid in polar coordinates with varying angle taking each detection as center of grid row (as illustrated in Fig. 3);
- Calculate SAR intensity image (in other words: SAR amplitude image) for all pixels in polar-coordinates (as illustrated in Fig. 3);
- Apply weighting of rows to normalize impact of all detections;
- Integration over detections to get a one-dimensional function of SAR intensity depending on mounting angle correction (as illustrated in Fig. 4);
- Calculate maximum of one-dimensional SAR intensity function (in other words SAR amplitude function, as illustrated in Fig. 4);
- Get mounting angle correction from maximum of function;
- Apply correction to mounting angle; and
- Send corrected detections to downstream modules.

According to various embodiments, the mounting angle may be estimated only when the yaw rate of the vehicle (for example determined by an IMU (inertial measurement unit) of the vehicle) is low, for example below a pre-determined threshold, for example less than 1 deg/s.

According to various embodiments, the mounting angle may be estimated only when the speed of the vehicle is within pre-determined bounds, for example between 10 km/h and 40 km/h.

According to various embodiments, RAM (random access memory) and computational costs may be reduced compared to commonly used methods. For example, only a region of interest of the SAR image around a detection may be needed for the method, and hence, the full SAR image may be divided into a few very small SAR images of a few pixels, and only one or more of the very small SAR images may be used. The size of the small images may be smaller in near-range and larger in far-range, and may for example represent an area of a few cm.

According to various embodiments, the detections which are used for determining the mounting angle may be filtered; for example, only stationary detections (for example detections coming from stationary environment or stationary object or calculated by using range-rate) may be used; or for example, only strong detections with high amplitude may be used.

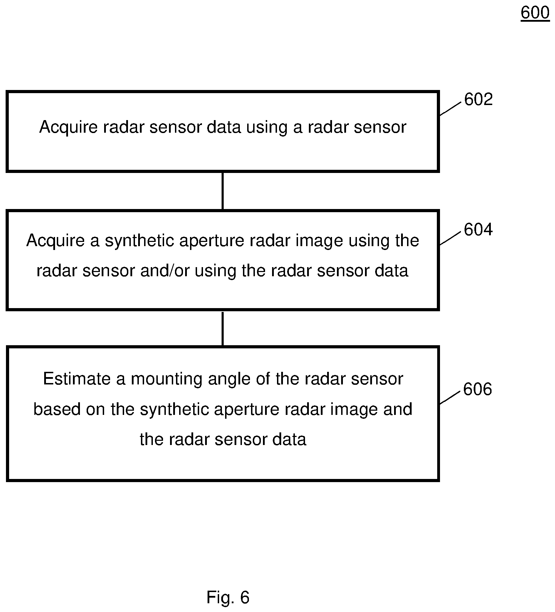

Fig. 6 shows a flow diagram illustrating a method for estimating a mounting angle of a radar sensor on a vehicle according to various embodiments. At 602, radar sensor data may be acquired using a radar sensor. At 604, a synthetic aperture radar image may be acquired using the radar sensor and/or using the radar sensor data. At 606, a mounting angle of the radar sensor may be estimated based on the synthetic aperture radar image and the radar sensor data.

According to various embodiments, estimating the mounting angle may include solving a mathematical problem, for example solving an optimization problem.

According to various embodiments, estimating the mounting angle may be repeated based on a pre-determined rule.

According to various embodiments, the pre-determined rule may be based on a pre-determined time interval.

According to various embodiments, the pre-determined rule may be based on an expected change of the mounting angle.

According to various embodiments, the mounting angle may be estimated in a situation where a yaw rate of the vehicle is below a pre-determined threshold.

According to various embodiments, the mounting angle may be estimated in a situation where a speed of the vehicle is within a pre-determined range.

According to various embodiments, the method may further include dividing the synthetic aperture radar image into a plurality of sub-images; wherein estimating the mounting angle is based only on a subset of the plurality of sub-images.

According to various embodiments, the subset may be related to stationary detections.

According to various embodiments, wherein the subset may be related to strong radar cross section detections.

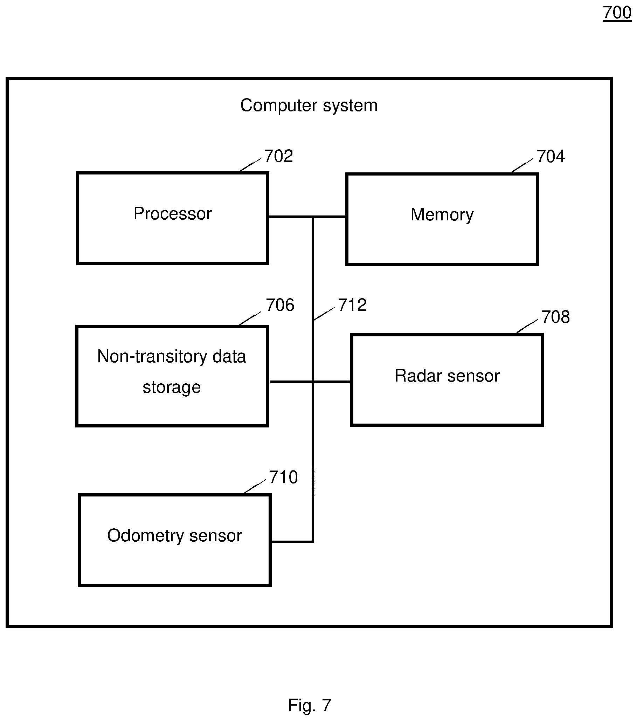

Fig. 7 shows a computer system 700 with a plurality of computer hardware components configured to carry out steps of a computer implemented method for estimating a mounting angle of a radar sensor on a vehicle according to various embodiments. The computer system 700 may include a processor 702, a memory 704, and a non-transitory data storage 706. A radar sensor 708 and/or an odometry sensor 710 may be provided as part of the computer system 700 (like illustrated in Fig. 7), or may be provided external to the computer system 700.

The processor 702 may carry out instructions provided in the memory 704. The non-transitory data storage 706 may store a computer program, including the instructions that may be transferred to the memory 704 and then executed by the processor 702. The radar sensor 708 may be used for determining radar sensor data and for determining a synthetic aperture radar image as described herein. The odometry sensor 710 may be used to determine the speed of the vehicle and/or the yaw rate of the vehicle.

The processor 702, the memory 704, and the non-transitory data storage 706 may be coupled with each other, e.g. via an electrical connection 712, such as e.g. a cable or a computer bus or via any other suitable electrical connection to exchange electrical signals. The radar sensor 708 and/or the odometry sensor 710 may be coupled to the computer system 700, for example via an external interface, or may be provided as parts of the computer system (in other words: internal to the computer system, for example coupled via the electrical connection 712).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 700.

Each of the steps 602, 604, 606, and the further steps described above may be performed by computer hardware components.

Various embodiments may be applied to lifetime monitoring of radars mounted at a corner of the vehicle or at a front of the vehicle, in vehicle-calibration (for determining the mounting position of the radar), and online-calibration.

As described herein, the radar sensor mounting angle may be estimated by triggering a method under specific circumstances (like for example low yaw rate and/or low speed), generating small SAR image of a few pixel and overlaying radar detections, and optimizing a score based on sum over all SAR pixel amplitudes evaluated at detections depending on mounting angle.

The methods and systems according to various embodiments may be used in a central computing platform, and may improve performance of a radar sensor, for example for an L2/L2+ system.

The methods and systems according to various embodiments may be applied directly before tracker. The methods and systems according to various embodiments may use only data from a single scan instead of hundreds of scans. The methods and systems according to various embodiments may correct large mounting angle errors of a few degree, and may even enhance already precisely known mounting angles. The methods and systems according to various embodiments may not need complex logic, may have low CPU (central processing unit) and/or RAM usage. The methods and systems according to various embodiments may be implemented on the radar sensor.

The methods and systems according to various embodiments may estimate the mounting angle based on a trajectory of the vehicle, and/or based on speed and/or yaw rate (for example determined by the vehicle or by an IMU mounted on the vehicle), wherein the speed and/or yaw rate might may be determined based on radar odometry (for example by a radar sensor different from the radar sensor used for acquiring the radar sensor data and the synthetic aperture radar image.

Reference numeral list

| | |
|---|---|
| 100 | illustration of a method according to various embodiments |
| 102 | range fast Fourier transform data |
| 104 | SAR block |
| 106 | SAR image 106 |
| 108 | radar detections |
| 110 | mounting angle estimation block |
| 112 | mounting angle |
| | |
| 200 | illustration of a single-scan SAR image |
| 202 | single-scan SAR image of a fence |
| 204 | radar detections |
| | |
| 300 | illustration of detections in the radar coordinate system |
| 302 | detections |
| 304 | x axis |
| 306 | y axis |
| 308 | arcs |
| | |
| 350 | illustration of the SAR image resulting from the detections illustrated in Fig. 3A |
| 352 | horizontal axis |
| 354 | vertical axis |
| | |
| 400 | illustration of a graph representing SAR intensity as a function of mounting angle correction |
| 402 | vertical axis |
| 404 | horizontal axis |
| 500 | illustration of uncorrected detections with underlay of SAR image in cartesian radar sensor coordinates |
| 502 | SAR image |
| 504 | uncorrected detection |
| | |
| 550 | illustration of corrected detections with underlay of SAR image in cartesian radar sensor coordinates |
| 552 | corrected detection |
| | |
| 600 | flow diagram illustrating a method for estimating a mounting angle of a radar sensor on a vehicle according to various embodiments |
| 602 | step of acquiring radar sensor data using a radar sensor |
| 604 | step of acquiring a synthetic aperture radar image using the radar sensor and/or using the radar sensor data |
| 606 | step of estimating a mounting angle of the radar sensor based on the synthetic aperture radar image and the radar sensor data |
| 700 | computer system according to various embodiments |
| 702 | processor |
| 704 | memory |
| 706 | non-transitory data storage |
| 708 | radar sensor |
| 710 | odometry sensor |
| 712 | connection |

**Claims**

1. Computer implemented method for estimating a mounting angle of a radar sensor on a vehicle, the method comprising the following steps carried out by computer hardware components:

   - acquiring (602) radar sensor data using a radar sensor;
   - acquiring (604) a synthetic aperture radar image using the radar sensor and/or using the radar sensor data; and
   - estimating (606) a mounting angle of the radar sensor based on the synthetic aperture radar image and the radar sensor data.

2. The computer implemented method of claim 1, wherein estimating (606) the mounting angle comprises solving an mathematical problem.

3. The computer implemented method of at least one of claims 1 or 2, wherein estimating (606) the mounting angle is repeated based on a pre-determined rule.

4. The computer implemented method of claim 3, wherein the pre-determined rule is based on a pre-determined time interval.

5. The computer implemented method of at least one of claims 3 or 4, wherein the pre-determined rule is based on an expected change of the mounting angle.

6. The computer implemented method of at least one of claims 1 to 5, wherein the mounting angle is estimated in a situation where a yaw rate of the vehicle is below a pre-determined threshold.

7. The computer implemented method of at least one of claims 1 to 6, wherein the mounting angle is estimated in a situation where a speed of the vehicle is within a pre-determined range.

8. The computer implemented method of at least one of claims 1 to 7, further comprising the following steps carried out by the computer hardware components:

dividing the synthetic aperture radar image into a plurality of sub-images;
wherein estimating the mounting angle is based only on a subset of the plurality of sub-images.

9. The computer implemented method of claim 8, wherein the subset is related to stationary detections.

10. The computer implemented method of at least one of claims 8 or 9, wherein the subset is related to strong radar cross section detections.

11. Computer system, the computer system comprising a plurality of computer hardware components configured to carry out steps of the computer implemented method of at least one of claims 1 to 10.

12. Vehicle, comprising the computer system of claim 11.

13. The vehicle of claim 12, further comprising the radar sensor.

14. The vehicle of at least one of claims 12 or 13, further comprising an odometry sensor.

15. Non-transitory computer readable medium comprising instructions for carrying out the computer implemented method of at least one of claims 1 to 10.

100

Fig. 1

200

Fig. 2

300

Fig. 3A

350

Fig. 3B

<u>400</u>

Fig. 4

500

502

504

Fig. 5A

550

Fig. 5B

600

| Acquire radar sensor data using a radar sensor | 602 |

| Acquire a synthetic aperture radar image using the radar sensor and/or using the radar sensor data | 604 |

| Estimate a mounting angle of the radar sensor based on the synthetic aperture radar image and the radar sensor data | 606 |

Fig. 6

700

Computer system

Processor /702

Memory /704

Non-transitory data storage /706

/712

Radar sensor /708

Odometry sensor /710

Fig. 7

Europäisches
Patentamt
European
Patent Office
Office européen
des brevets

# EUROPEAN SEARCH REPORT

**Application Number**

EP 24 17 2956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PARK CHANUL ET AL: "Ground Reflection-Based Misalignment Detection of Automotive Radar Sensors", IEEE ACCESS, vol. 11, 30 June 2023 (2023-06-30), pages 66949-66959, XP093187555, USA ISSN: 2169-3536, DOI: 10.1109/ACCESS.2023.3291143 * abstract * * page 66950, left-hand column, paragraph 2nd - page 66950, right-hand column, paragraph 3rd; figure 2 * * paragraph [0III] * * paragraph [000V] * | 1-15 | INV. G01S7/10 G01S7/40 G01S13/931 G01S13/90 |
| A | JAGER M ET AL: "External Calibration of Antenna Pointing and Positions in Airborne SAR Systems", 2019 16TH EUROPEAN RADAR CONFERENCE (EURAD), EUMA, 2 October 2019 (2019-10-02), pages 41-44, XP033663828, [retrieved on 2019-11-18] * abstract * * paragraphs [000I], [III.A]; figures 1,3,6 * | 1-15 | **TECHNICAL FIELDS SEARCHED (IPC)** G01S |
| A | US 6 853 330 B1 (KRIKORIAN KAPRIEL V [US] ET AL) 8 February 2005 (2005-02-08) * abstract * * column 1, line 48 - column 2, line 67; claim 1; figures 5,6 * | 1-15 | |

The present search report has been drawn up for all claims

| Place of search | Date of completion of the search | Examiner |
|---|---|---|
| Munich | 1 October 2024 | van Norel, Jan |

EPO FORM 1503 03.82 (P04C01)

## ANNEX TO THE EUROPEAN SEARCH REPORT
## ON EUROPEAN PATENT APPLICATION NO.

EP 24 17 2956

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2024

| Patent document cited in search report | Publication date | Patent family member(s) | Publication date |
|---|---|---|---|
| US 6853330 B1 | 08-02-2005 | NONE | |

EPO FORM P0459

For more details about this annex : see Official Journal of the European Patent Office, No. 12/82